# EUROPEAN PATENT SPECIFICATION

(11) **EP 3 677 437 B1**
(45) Date of publication and mention of the grant of the patent: **06.07.2022**
(21) Application number: 18851153.9
(22) Date of filing: 31.08.2018
(51) Int. Cl.: B60C 1/00, B60C 11/00, B60C 15/06, C08C 19/25, C08K 3/04, C08K 3/36, C08L 7/00, C08L 9/06, C08L 101/12, C08C 19/22, C08C 19/44, C08F 236/10

(54) **PNEUMATIC TIRE**
LUFTREIFEN
PNEUMATIQUE

(30) Priority: 31.08.2017 JP 2017167968
(43) Date of publication of application: 08.07.2020
(73) Proprietor: Bridgestone Corporation, Tokyo 104-8340 (JP)
(72) Inventor: TSUBOTA, Takeshi, Tokyo 104-8340 (JP)
(74) Representative: Oxley, Robin John George
(86) International application number: PCT/JP2018/032426
(87) International publication number: WO 2019/045062

(56) References cited:
- EP-A2- 2 329 965
- WO-A1-2017/077714
- WO-A1-2017/122821
- JP-A- 2009 263 587
- JP-A- 2013 151 583
- JP-A- 2014 118 506
- JP-A- 2014 205 842
- JP-A- 2015 199 867
- JP-A- 2015 199 867

## Description

### Technical field

The present invention relates to a pneumatic tire including a tire case part and a tread part having improved wet grip performance and low rolling resistance.

### Background art

In recent years, fuel-efficient tires have been developed to meet a social demand for energy saving. Measures to develop such tires, an investigation has been conducted from the perspective of reducing the weight of the tire, extending the product life, and "achieving low loss", or alternatively reducing rolling resistance of the tire.

Along with the further increasing demand for the fuel efficiency of tires, not only the reduction of rolling resistance of the tire tread, but also the reduction of rolling resistance of tire members used in the tire case member, such as the ply coating rubber, the belt coating rubber, the squeegee rubber between the plies, the cushion rubber between the tread and the belt, the bead filler, and the rubber chafer, has been advanced.
The main measure to reduce the rolling resistance is increasing the content of a large particle size carbon black or silica as a reinforcing filler.

On the other hand, tires play an important role in safety in traveling of vehicles, and thus high grip performance including wet properties related to braking performance is also required. However, a rubber composition having a high tan δ at 0°C, when simply used in the tread rubber to improve the wet performance of the tire, would also increase a tan δ at 60°C, which is related to the rolling resistance of the tire, thus increasing the rolling resistance of the tire. In addition, on the contrary, a rubber composition having a low tan δ at 60°C, when simply used in the tread rubber to reduce the rolling resistance of the tire, would also reduce a tan δ at 0°C, which is related to the wet grip properties of the tire, thus reducing the wet grip properties of the tire. Thus, there has been a limit to achieving both reduced rolling resistance and improved wet property of the tire.

Patent Document 1 discloses a method of containing aroma oil as an approach to improve wet properties, however the method is disadvantageous in terms of rolling resistance. Moreover, Patent Document 1 describes that the method cannot sufficiently provide a significant effect in terms of improving wet properties. Document 1 discloses that aroma oil is thus not used or reduced as much as possible, and a formulation containing specific amounts of natural rubber, a thermoplastic resin, and silica can provide a tire having not only excellent braking performance on a wet road surface but also excellent braking performance on a dry road surface and a slippery wet road surface including a manhole.

Reduction in rolling resistance will reduce heat generation from the tire. In such a case, the temperature of the tire itself will not be easily increased, particularly when the tire comes into contact with a low temperature road surface, and thus the deformation of the tire tread part will be also reduced. As a result, problems of the reduction of the wet grip properties and the extension of the braking distance are caused.

### Conventinal art documents

### Patent documents

Patent Document 1: PCT International Publication No. WO 2015/079703

### Summary of the invention

### Problems to be solved by the invention

A pneumatic tire having both wet grip performance and low rolling resistance is desired.

### Means to solve problems

Provided is a pneumatic tire including: a tire tread part having both wet grip properties and low rolling resistance, and a tire case having low rolling resistance, using a rubber composition having a tan δ in a specific range; and achieving low rolling resistance of the tire as a whole.

That is, the present invention resides in the following (1) to (9) .
(1) A pneumatic tire including: a carcass as a skeleton, the carcass formed of one or more carcass plies extending in a toroidal shape across a pair of bead parts; one or more belt layers disposed on the outer side in the tire radial direction of a crown part of the carcass; a tread part disposed on the outer side in the tire radial direction of the belt layer, the tread part forming a tread surface part; and a rubber chafer part disposed on the outer surface in the tire width direction of the bead part; wherein a rubber composition for the tread part includes: a rubber component (A), a thermoplastic resin (B), and a reinforcing filler (C); the rubber component (A) includes from 50 to 95% by mass of natural rubber: NR, from 5 to 50% by mass of a modified styrene-butadiene copolymer rubber: modified SBR, and from 10 to 50 parts by mass of the thermoplastic resin (B) based on 100 parts by mass of the rubber component; and a rubber composition for the rubber chafer part includes a carbon black having a nitrogen adsorption specific surface area: N₂SA of from 25 to 43 m²/g.
(2) The pneumatic tire according to (1), wherein the rubber composition for the tread part has a loss sine: tan δ at 1% strain satisfying tan δ₀ ≤ 0.5 and tan δ₁ - tan δ₂ ≤ 0.07, where tan δ₀ is a tan δ at 0°C, tan δ₁ is a tan δ at 30°C, and tan δ₂ is a tan δ at 60°C.
(3) The pneumatic tire according to (1) or (2), wherein the rubber composition for the tread part contains one or more thermoplastic resins (B) selected from the group consisting of a C₅ resin, a C₅-C₉ resin, a C₉ resin, a terpene resin, a terpene-aromatic compound resin, a rosin resin, a dicyclopentadiene resin, and an alkylphenol resin.
(4) The pneumatic tire according to any one of (1) to (3), wherein the reinforcing filler (C) includes 70% by mass or more of silica in the rubber composition for the tread part.
(5) The pneumatic tire according to any one of (1) to (4), wherein, in the tread part, the modified styrene-butadiene copolymer rubber is modified with a hydrocarbyloxysilane compound represented by General Formula (IV) below: 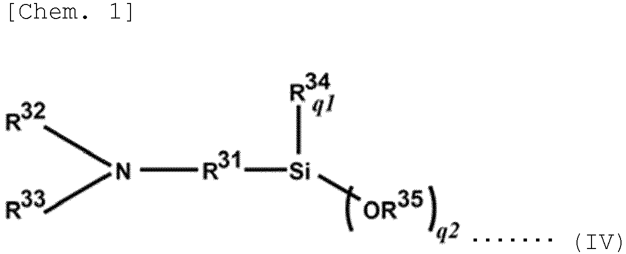 where q1 + q2 = 3, with the provisio that q1 is an integer from 0 to 2, and q2 is an integer from 1 to 3; R³¹ is a divalent aliphatic or alicyclic hydrocarbon group having from 1 to 20 carbons, or a divalent aromatic hydrocarbon group having from 6 to 18 carbons; R³² and R³³ are each independently a hydrolyzable group, a monovalent aliphatic or alicyclic hydrocarbon group having from 1 to 20 carbons, or a monovalent aromatic hydrocarbon group having from 6 to 18 carbons; R³⁴ is a monovalent aliphatic or alicyclic hydrocarbon group having from 1 to 20 carbons, or a monovalent aromatic hydrocarbon group having from 6 to 18 carbons, where R³⁴s may be the same or different when q1 is 2; and R³⁵ is a monovalent aliphatic or alicyclic hydrocarbon group having from 1 to 20 carbons, or a monovalent aromatic hydrocarbon group having from 6 to 18 carbons, where R³⁵s may be the same or different when q2 is 2 or greater; in General Formula (IV) or
   General Formula (V): 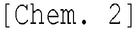 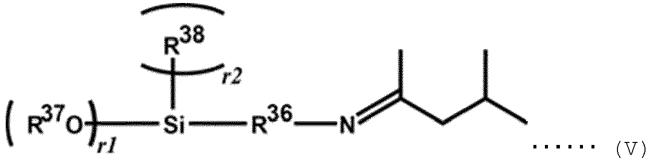 where r1 + r2 = 3, with the provisio that r1 is an integer from 1 to 3, and r2 is an integer from 0 to 2; R³⁶ is a divalent aliphatic or alicyclic hydrocarbon group having from 1 to 20 carbons, or a divalent aromatic hydrocarbon group having from 6 to 18 carbons; R³⁷ is a dimethylaminomethyl group,
   a dimethylaminoethyl group, a diethylaminomethyl group, a diethylaminoethyl group, a methylsilyl(methyl)aminomethyl group, a methylsilyl(methyl)aminoethyl group,
   a methylsilyl(ethyl)aminomethyl group,
   a methylsilyl(ethyl)aminoethyl group,
   a dimethylsilylaminomethyl group, a dimethylsilylaminoethyl group, a monovalent aliphatic or alicyclic hydrocarbon group having from 1 to 20 carbons, or a monovalent aromatic hydrocarbon group having from 6 to 18 carbons, where R³⁷s may be the same or different when r1 is 2 or greater; and R³⁸ is a hydrocarbyloxy group having from 1 to 20 carbons, a monovalent aliphatic or alicyclic hydrocarbon group having from 1 to 20 carbons, or a monovalent aromatic hydrocarbon group having from 6 to 18 carbons, where R³⁸s may be the same or different when r2 is 2 in General Formula (V).
(6) The pneumatic tire according to any one of (1) to (5), wherein a loss tangent: tan δ_{c} of the rubber composition for the rubber chafer part at 1% strain at 60°C satisfies tan δ_{c} ≤ 0.20.
(7) The pneumatic tire according to any one of (1) to (6), wherein a relation between the loss sine: tan δ₀ of the rubber composition for the tread part at 0°C and the loss tangent: tan δ_{c} of the rubber composition for the rubber chafer part satisfies 0.2 ≤ tan δ_{c}/tan δ₀ ≤ 0.75.
(8) The pneumatic tire according to any one of (1) to (7), wherein a rubber composition containing a carbon black having a nitrogen adsorption specific surface area: N₂SA of from 25 to 43 m²/g is used also in a ply coating rubber in a tire case including the rubber chafer part in the pneumatic tire.
(9) The pneumatic tire according to any one of (1) to (8), wherein a rubber composition containing a carbon black having a nitrogen adsorption specific surface area: N₂SA from 25 to 43 m²/g is used also in a member other than the rubber chafer part and the ply coating rubber in the tire case including the rubber chafer part in the pneumatic tire.

### Effects of the invention

According to (1), a pneumatic tire including: a tread having both a wet property and low rolling resistance; and improved low rolling resistance of a tire case member, especially improved low rolling resistance of a rubber chafer part is obtained.

According to (2), the low rolling resistance of the tread part can be improved.

According to (3) to (5), the wet property of the tread part can be improved.

According to (6) and (7), the low rolling resistance of the pneumatic tire can be improved by the contribution of the rubber chafer part to the low rolling resistance.

According to (8) and (9), the low rolling resistance of the pneumatic tire can be improved by the improved low rolling resistance of the various tire case members.

### Brief description of drawings

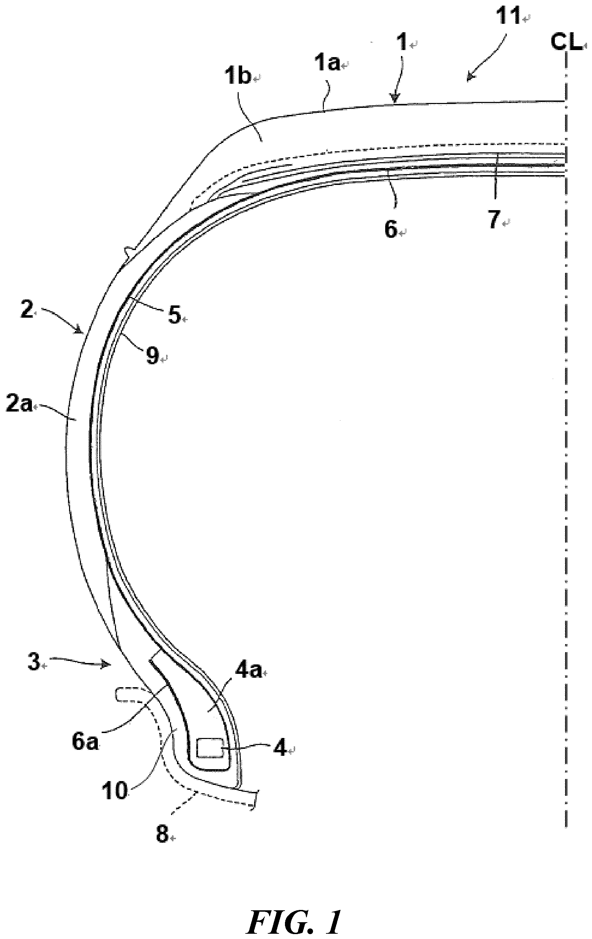

[FIG. 1] A half cross-sectional view in the width direction of a pneumatic tire illustrating an example of an embodiment of the present invention.

### Embodiments of the invention

A rubber composition for a tread part according to the present invention is formed by compounding a rubber component (A) containing 40% by mass or more of natural rubber, in which the rubber composition for the tread part is formed by compounding from 5 to 50 parts by mass of at least one thermoplastic resin (B) selected from among a C₅ resin, a C₅-C₉ resin, a C₉ resin, a terpene resin, a terpene-aromatic compound resin, a rosin resin, a dicyclopentadiene resin, and an alkylphenol resin, based on 100 parts by mass of the rubber component; and a filler (C) containing silica.

### <<Rubber component (A) >>

The rubber component (A) used in the rubber composition according to an embodiment of the present invention contains 40% by mass or more, suitably 50% by mass or more, more suitably 70% by mass or more, and particularly suitably 80% by mass or more of natural rubber: NR. The rubber component (A) containing 40% by mass or more of the NR provides an effect that is likely to exhibit a sufficient effect due to containing the C₅ resin described below.

Furthermore, the rubber component (A) preferably contains from 5 to 60% by mass, suitably from 5 to 50% by mass, more suitably from 5 to 30% by mass of, and particularly suitably from 10 to 20% by mass of a modified styrene-butadiene copolymer rubber: SBR. The rubber component containing the modified SBR increases the glass transition point: Tg of the rubber composition and can improve braking performance on a dry road surface and steering stability. The rubber component (A) containing less than 5% by mass of the SBR may fail to provide sufficient effects described above. In addition, the rubber component (A) containing more than 60% by mass of the SBR inevitably contains less than 40% by mass of the NR, and this would be less likely to provide the above effects due to containing the NR. Additionally, such a rubber component (A) may cause problems of increasing of rolling resistance due to increasing of heat build-up of the rubber and less road surface followability on a slippery wet road surface due to the reduction of flexibility of the rubber.

The rubber component (A) can appropriately contain a rubber, such as a butadiene rubber: BR, an acrylonitrile-butadiene copolymer rubber: NBR, a chloroprene rubber: CR, a polyisoprene rubber: IR, and a butyl rubber: IIR, as an additional rubber material.

### <<Thermoplastic resin (B)>>

The rubber composition according to an embodiment of the present invention is formed by compounding from 5 to 50 parts by mass of at least one thermoplastic resin (B) selected from among a C₅ resin, a C₅-C₉ resin, a C₉ resin, a terpene resin, a terpene-aromatic compound resin, a rosin resin, a dicyclopentadiene resin, and an alkylphenol resin, relative to 100 parts by mass of the rubber component. Compounding the rubber composition according to an embodiment of the present invention containing a defined amount of the thermoplastic resin (B) has an increased glass transition point: Tg and an improved loss tangent: tan δ at 0°C. As a result, the performance of the tire mainly on a wet road surface is improved. The rubber component (A) in the rubber composition according to an embodiment of the present invention contains 40% by mass or more of the NR. The thermoplastic resin (B) has high compatibility with NR so that the effects described above is readily provided.

In an embodiment of the present invention, the "C₅ resin" refers to a C₅ synthetic petroleum resin and refers to a solid polymer obtained by polymerizing a C₅ fraction using a Friedel-Crafts catalyst, for example, such as AlCl₃ or BF₃. Specifically, the C₅ resin is exemplified by a copolymer formed mainly of isoprene, cyclopentadiene, 1,3-pentadiene, 1-pentene, or the like, a copolymer of 2-pentene and dicyclopentadiene, and a polymer formed mainly of 1,3-pentadiene.

In addition, the use of the C₅ resin as the thermoplastic resin (B) can also further improve braking performance on icy and snowy road surfaces.

In an embodiment of the present invention, the "C₅-C₉ resin" refers to a C₅-C₉ synthetic petroleum resin and refers to a solid polymer obtained by polymerizing a C₅-C₉ fraction using a Friedel-Crafts catalyst, for example, such as AlCl₃ or BF₃. Examples of the "C₅-C₉ resin" include copolymers formed mainly of styrene, vinyl toluene, α-methylstyrene, and indene. In an embodiment of the present invention, the C₅-C₉ resin is preferably a resin containing a small amount of a component of C₉ or greater in terms of compatibility with the component (A) . Here, "containing a small amount of a component of C₉ or greater" means that the amount of the component of C₉ or greater in the total resin amount is less than 50% by mass and preferably 40%by mass or less.

In addition, the use of the C₅-C₉ resin as the thermoplastic resin (B) can also further improve handling properties. Here, the C₅-C₉ fraction used in the polymerization of the solid polymer as the "C₅-C₉ resin" contains a fraction other than the C₅ fraction and a C₉ fraction.

In an embodiment of the present invention, the "C₉ resin" refers to a C₉ synthetic petroleum resin and refers to a solid polymer obtained by polymerizing a C₉ fraction using a Friedel-Crafts catalyst, for example, such as AlCl₃ or BF₃. Examples of the "C₉ resin" include copolymers formed mainly of indene, α-methylstyrene, vinyl toluene, or the like. In addition, the use of the C₉ resin as the thermoplastic resin (B) can also further improve handling performance.

The terpene resin is a solid resin obtained by compounding turpentine oil obtained simultaneously during obtaining rosin from a tree of the pine genus or a polymer component separated from turpentine oil, and polymerizing the blend using a Friedel-Crafts catalyst. Examples of the terpene resin include a β-pinene resin and an α-pinene resin. In addition, representative examples of the terpene-aromatic compound resin may include a terpene-phenolic resin. The terpene-phenolic resin can be obtained by a method of allowing terpenes and various phenols to react using a Friedel-Crafts catalyst, or further condensing the resulting product with formalin. The raw material terpene is not particularly limited and preferably a monoterpene hydrocarbon, such as α-pinene or limonene; more preferably a terpene containing α-pinene; and particularly preferably α-pinene. In an embodiment of the present invention, a terpene-phenolic resin having a low proportion of a phenolic component is suitable. Here, "having a low proportion of a phenolic component" means that the amount of the phenolic component in the total resin amount is less than 50% by mass and preferably 40% by mass or less. In addition, the use of the terpene-aromatic compound resin, particularly a terpene-phenolic resin, as the thermoplastic resin (B), can also further improve handling performance.

Examples of the rosin resin include natural resin rosins, such as gum rosin, tall oil rosin, and wood rosin contained in a raw pine resin or tall oil. In addition, examples of modified rosins, rosin derivatives, and modified rosin derivatives include rosins, such as polymerized rosin and partially hydrogenated polymerized rosin; glycerin ester rosin, partially hydrogenated glycerin ester rosin, and fully hydrogenated glycerin ester rosin; and pentaerythritol ester rosin and partially hydrogenated pentaerythritol ester rosin, and polymerized pentaerythritol ester rosin.

Furthermore, the use of the rosin resin as the thermoplastic resin (B) can also further improve handling performance.

The dicyclopentadiene resin refers to a resin obtained by polymerizing dicyclopentadiene using a Friedel-Crafts catalyst, for example, such as AlCl₃ or BF₃. Specific examples of commercially available products of the dicyclopentadiene resin include resins, such as Quintone 1920 and Quintone 1105 manufactured by Zeon Corporation, and Marukarez M-890A manufactured by Maruzen Petrochemical Co., Ltd. In addition, the use of the dicyclopentadiene resin as the thermoplastic resin (B) can also further improve braking performance on icy and snowy road surfaces.

Examples of the alkylphenol resin include alkylphenol-acetylene resins, such as a p-tert-butylphenol-acetylene resin; and
alkylphenol-formaldehyde resins having a low degree of polymerization.

In addition, the use of the alkylphenol resin as the thermoplastic resin (B) can also further improve handling performance. Specifically, examples of the alkylphenol resin include trade designated Hitanol 1502, manufactured by Hitachi Chemical Co., Ltd., which is a novolac alkylphenol resin, and trade designated Koresin, manufactured by BASF Corporation, which is a p-t-butylphenol acetylene resin.

The above described resins may be used alone and two or more of the resins may be used in a mixture, and the rubber component compounds from 5 to 50 parts by weight and preferably from 10 to 30 parts by weight of the resin, based on 100 parts by weight of the rubber component. The compounded amount of the thermoplastic resin (B) of 5 to 50 parts by mass based on 100 parts by mass of the rubber component (A) enables the tire to have desired fracture properties and wear resistance. The compounded amount of the thermoplastic resin (B) of 5 parts by mass or more allows the tire to sufficiently exhibit braking performance on a wet road surface. On the other hand, the content of the thermoplastic resin (B) of 50 parts by mass or less provides desired wear resistance and fracture properties.

### <<Reinforcing filler (C)>>

The rubber composition according to the present invention contains from 20 to 120 parts by mass and preferably from 50 to 100 parts by mass of the reinforcing filler (C), based on 100 parts by mass of the rubber component (A) . In addition, the reinforcing filler (C) contains 70% by mass or more, preferably from 80 to 100% by mass, and more preferably from 90 to 100% by mass of silica. That is, the rubber composition according to an embodiment of the present invention contains from 10 to 120 parts by mass and preferably from 45 to 100 parts by mass of silica, based on 100 parts by mass of the rubber component (A) . The compounded amount of the reinforcing filler (C) of 20 to 120 parts by mass based on 100 parts by mass of the rubber component (A) enables the rubber component (A) to exhibit the reinforcing effect without impairing properties of the rubber component (A), such as flexibility. Furthermore, the compounded amount of silica of 70% by mass or more in the reinforcing filler (C) has advantages of exhibiting the effects of reducing rolling resistance and improving braking performance on a wet road surface and being able to maintain flexibility of the rubber component.

The effect of compounding silica in the rubber composition according to the present invention is to enable the rubber composition to have sufficient reinforcing properties and a low heat build-up without impairing the flexibility of the rubber composition in a state where the NR and the thermoplastic resin (B) are well-dispersed. Thus, the rubber composition according to the present invention, because of flexibility, has high followability to a road surface with low friction coefficient, for example, a slippery wet road surface, such as a manhole, and thus can provide sufficient braking performance on such a slippery wet road surface.

Examples of the silica include wet silica, that is, hydrous silicate, dry silica, that is, silicic anhydride, calcium silicate, and aluminum silicate. Among silica, wet silica can be suitably used. The BET specific surface area of the wet silica is preferably from 40 to 350 m²/g, more preferably from 150 to 300 m²/g, and still more preferably from 200 to 250 m²/g. Silica having a BET specific surface area in the range has an advantage of being able to provide both rubber reinforcing properties and dispersibility into the rubber component. Examples of such silica that can be used include commercially available products, such as trade designated "Nipsil AQ" and "Nipsil KQ" available from Tosoh Silica Corporation and trade designated "Ultrasil VN3" available from Evonik Corporation. One type of the silica may be used alone, or two or more silica may be used in combination.

Examples of the reinforcing filler (C) that can be appropriately compounded other than silica include a carbon black, aluminum oxide, clay, alumina, talc, mica, kaolin, a glass balloon, a glass bead, calcium carbonate, magnesium carbonate, magnesium hydroxide, calcium carbonate, magnesium oxide, titanium oxide, potassium titanate, and barium sulfate.

### [Terminal modification]

In the rubber composition according to the present invention, a styrene-butadiene copolymer rubber: SBR formed by modifying the terminal group of the rubber component polymer using a modifier is preferably used.

The modifier used in the present invention is a modifier containing a functional group having interactivity with silica and is preferably a modifier having at least one atom selected from a silicon atom, a nitrogen atom, and an oxygen atom. In terms of having high affinity for the silica, the modifier is more preferably a hydrocarbyloxysilane compound.

The hydrocarbyloxysilane compound is not particularly limited but is preferably a hydrocarbyloxysilane compound represented by General Formula (I) below.

### R¹ₐ-Si-(OR²)₄₋ₐ ···(I)

In General Formula (I), R¹ and R² each independently represent a monovalent aliphatic hydrocarbon group having from 1 to 20 carbons or a monovalent aromatic hydrocarbon group having from 6 to 18 carbons; and a is an integer from 0 to 2; where each OR² may be the same or different from each other when a plurality of OR²s are present; and no active proton is contained in the molecule.

The hydrocarbyloxysilane compound represented by General Formula (I) above is preferably a hydrocarbyloxysilane compound represented by General Formula (II) below. 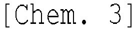 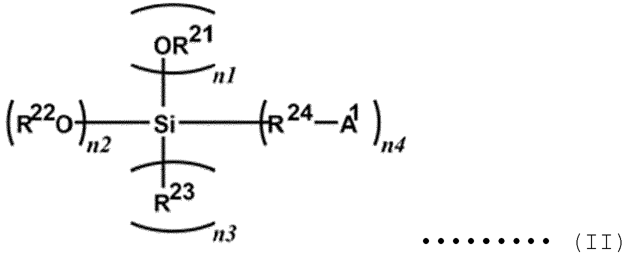 In General Formula (II), n1 + n2 + n3 + n4 = 4, with the provisio that n2 is an integer from 1 to 4; n1, n3, and n4 are integers from 0 to 3; A¹ is at least one functional group selected from among a saturated cyclic tertiary amine compound residue, an unsaturated cyclic tertiary amine compound residue, a ketimine residue, a nitrile group, an isocyanate group, a thioisocyanate group, an epoxy group, a thioepoxy group, a trihydrocarbyl isocyanurate group, a dihydrocarbyl carbonate ester group, a nitrile group, a pyridine group, a ketone group, a thioketone group, an aldehyde group, a thioaldehyde group, an amide group, a carboxylate ester group, a thiocarboxylate ester group, a metal salt of a carboxylate ester, a metal salt of a thiocarboxylate ester, a carboxylic anhydride residue, a carboxylic halide residue, and a primary or secondary amino group or a mercapto group including a hydrolyzable group, where A¹s may be the same or different when n4 is 2 or greater, and A¹ may be a divalent group bonded to Si to form a ring structure; R²¹ is a monovalent aliphatic or alicyclic hydrocarbon group having from 1 to 20 carbons, or a monovalent aromatic hydrocarbon group having from 6 to 18 carbons, where R²¹s may be the same or different when n1 is 2 or greater; R²³ is a monovalent aliphatic or alicyclic hydrocarbon group having from 1 to 20 carbon atoms, a monovalent aromatic hydrocarbon group having from 6 to 18 carbons, or a halogen atom selected from fluorine, chlorine, bromine, and iodine, where R²³s may be the same or different when n3 is 2 or greater; and R²² is a monovalent aliphatic or alicyclic hydrocarbon group having from 1 to 20 carbons, or a monovalent aromatic hydrocarbon group having from 6 to 18 carbons, where each R²² may contain a nitrogen atom and/or a silicon atom, and R²²s may be the same or different from each other when n2 is 2 or greater, or alternatively R²²s are bonded together to form a ring; and R²⁴ is a divalent aliphatic or alicyclic hydrocarbon group having from 1 to 20 carbons, or a divalent aromatic hydrocarbon group having from 6 to 18 carbons, where R²⁴s may be the same or different when n4 is 2 or greater.

The hydrolyzable group in the primary or secondary amino group including a hydrolyzable group or in the mercapto group including a hydrolyzable group is preferably a trimethylsilyl group or a tert-butyldimethylsilyl group and particularly preferably a trimethylsilyl group.

Note that "a monovalent aliphatic or alicyclic hydrocarbon group having from 1 to 20 carbons" refers to "a monovalent aliphatic hydrocarbon group having from 1 to 20 carbons or a monovalent alicyclic hydrocarbon group having from 3 to 20 carbons." The same applies to the divalent hydrocarbon group.

Furthermore, the hydrocarbyloxysilane compound represented by General Formula (I) above is more preferably a hydrocarbyloxysilane compound represented by General Formula (III) below. 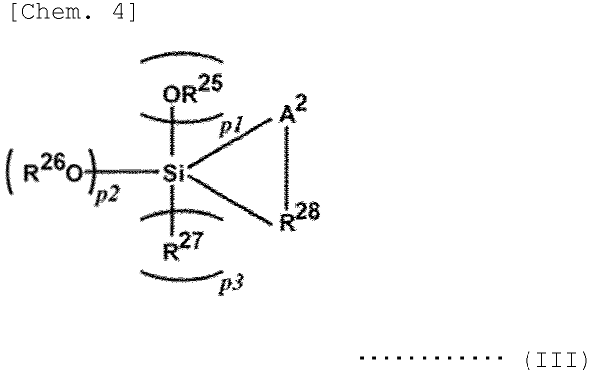 In General Formula (III), p1 + p2 + p3 = 2, with the provisio that p2 is an integer from 1 to 2, p1 and p3 are integers from 0 to 1, A² is NRa or sulfur, and Ra is a monovalent hydrocarbon group, a hydrolyzable group, or a nitrogen-containing organic group. The hydrolyzable group is preferably a trimethylsilyl group or a tert-butyldimethylsilyl group and particularly preferably a trimethylsilyl group. R²⁵ is a monovalent aliphatic or alicyclic hydrocarbon group having from 1 to 20 carbons, or a monovalent aromatic hydrocarbon group having from 6 to 18 carbons; R²⁷ is a monovalent aliphatic or alicyclic hydrocarbon group having from 1 to 20 carbons, a monovalent aromatic hydrocarbon group having from 6 to 18 carbons, or a halogen atom selected from fluorine, chlorine, bromine, and iodine; R²⁶ is a monovalent aliphatic or alicyclic hydrocarbon group having from 1 to 20 carbons, a monovalent aromatic hydrocarbon group having from 6 to 18 carbons, or a nitrogen-containing organic group, where each R²⁶ may contain a nitrogen atom and/or a silicon atom, and R²⁶s are the same or different from each other when p2 is 2, or alternatively R²⁶s are bonded together to form a ring; and R²⁸ is a divalent aliphatic or alicyclic hydrocarbon group having from 1 to 20 carbons, or a divalent aromatic hydrocarbon group having from 6 to 18 carbons.

Furthermore, the hydrocarbyloxysilane compound represented by General Formula (I) above is more preferably a hydrocarbyloxysilane compound represented by General Formula (IV) or (V) below. 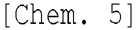 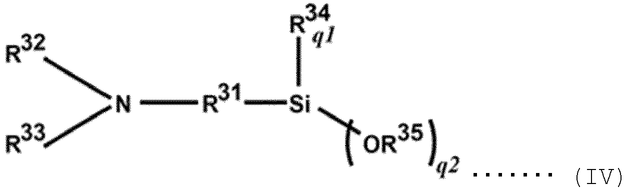 In General Formula (IV), q1 + q2 = 3, with the provisio that q1 is an integer from 0 to 2, and q2 is an integer from 1 to 3; R³¹ is a divalent aliphatic or alicyclic hydrocarbon group having from 1 to 20 carbons, or a divalent aromatic hydrocarbon group having from 6 to 18 carbons; R³² and R³³ are each independently a hydrolyzable group, a monovalent aliphatic or alicyclic hydrocarbon group having from 1 to 20 carbons, or a monovalent aromatic hydrocarbon group having from 6 to 18 carbons; R³⁴ is a monovalent aliphatic or alicyclic hydrocarbon group having from 1 to 20 carbons, or a monovalent aromatic hydrocarbon group having from 6 to 18 carbons, where R³⁴s may be the same or different when q1 is 2; and R³⁵ is a monovalent aliphatic or alicyclic hydrocarbon group having from 1 to 20 carbons, or a monovalent aromatic hydrocarbon group having from 6 to 18 carbons, where R³⁵s may be the same or different when q2 is 2 or greater.

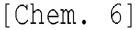

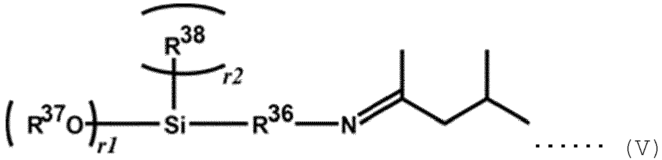

In General Formula (V), r1 + r2 = 3, with the provisio that r1 is an integer from 1 to 3, and r2 is an integer from 0 to 2; R³⁶ is a divalent aliphatic or alicyclic hydrocarbon group having from 1 to 20 carbons, or a divalent aromatic hydrocarbon group having from 6 to 18 carbons; R³⁷ is
a dimethylaminomethyl group, a dimethylaminoethyl group,
a diethylaminomethyl group, a diethylaminoethyl group,
a methylsilyl(methyl)aminomethyl group,
a methylsilyl(methyl)aminoethyl group,
a methylsilyl(ethyl)aminomethyl group,
a methylsilyl(ethyl)aminoethyl group,
a dimethylsilylaminomethyl group, a dimethylsilylaminoethyl group, a monovalent aliphatic or alicyclic hydrocarbon group having from 1 to 20 carbon atoms, or a monovalent aromatic hydrocarbon group having from 6 to 18 carbons, where R³⁷s may be the same or different when r1 is 2 or greater; and R³⁸ is a hydrocarbyloxy group having from 1 to 20 carbons, a monovalent aliphatic or alicyclic hydrocarbon group having from 1 to 20 carbons, or a monovalent aromatic hydrocarbon group having from 6 to 18 carbons, where R³⁸s may be the same or different when r2 is 2.

Furthermore, the modifier used in the present invention is preferably a hydrocarbyloxysilane compound including two or more nitrogen atoms represented by General Formula (VI) or (VII) below.

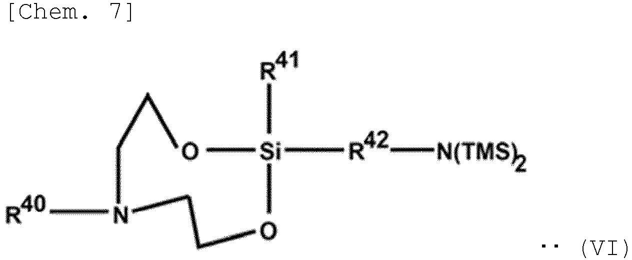

In General Formula (VI) above, TMS is a trimethylsilyl group; R⁴⁰ is a trimethylsilyl group, a monovalent aliphatic or alicyclic hydrocarbon group having from 1 to 20 carbons, or a monovalent aromatic hydrocarbon group having from 6 to 18 carbons; R⁴¹ is a hydrocarbyloxy group having from 1 to 20 carbons, a monovalent aliphatic or alicyclic hydrocarbon group having from 1 to 20 carbons, or a monovalent aromatic hydrocarbon group having from 6 to 18 carbons; and R⁴² is a divalent aliphatic or alicyclic hydrocarbon group having from 1 to 20 carbons, or a divalent aromatic hydrocarbon group having from 6 to 18 carbons. 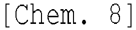 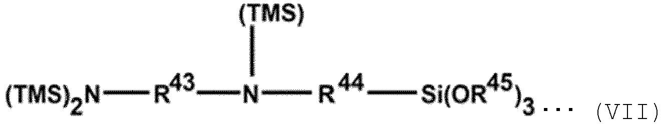 In General Formula (VII), TMS is a trimethylsilyl group; R⁴³ and R⁴⁴ are each independently a divalent aliphatic or alicyclic hydrocarbon group having from 1 to 20 carbons, or a divalent aromatic hydrocarbon group having from 6 to 18 carbons; and R⁴⁵ is a monovalent aliphatic or alicyclic hydrocarbon group having from 1 to 20 carbons, or a monovalent aromatic hydrocarbon group having from 6 to 18 carbons, where the plurality of R⁴⁵s may be the same or different.

In addition, the hydrocarbyloxysilane compound represented by General Formula (I) above is preferably a hydrocarbyloxysilane compound represented by General Formula (VIII) below.

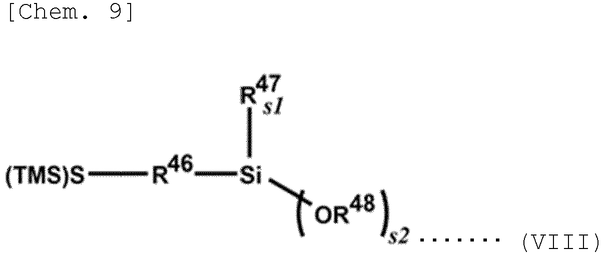

In General Formula (VIII) above, s1 + s2 = 3, with the provisio that s1 is an integer from 0 to 2, and s2 is an integer from 1 to 3; TMS is a trimethylsilyl group; R⁴⁶ is a divalent aliphatic or alicyclic hydrocarbon group having from 1 to 20 carbons, or a divalent aromatic hydrocarbon group having from 6 to 18 carbons; and R⁴⁷ and R⁴⁸ are each independently a monovalent aliphatic or alicyclic hydrocarbon group having from 1 to 20 carbons, or a monovalent aromatic hydrocarbon group having from 6 to 18 carbons. The plurality of R⁴⁷ or R⁴⁸ may be the same or different.

Furthermore, the modifier used in the present invention is preferably a hydrocarbyloxysilane compound represented by General Formula (IX) below. 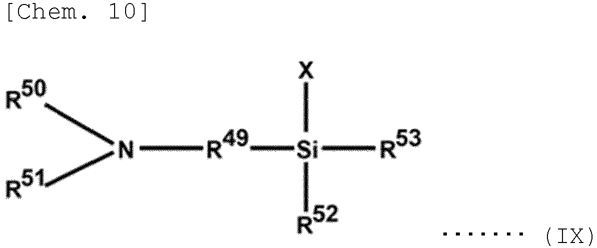 In General Formula (IX) , X is a halogen atom; R⁴⁹ is a divalent aliphatic or alicyclic hydrocarbon group having from 1 to 20 carbons, or a divalent aromatic hydrocarbon group having from 6 to 18 carbons; R⁵⁰ and R⁵¹ are each independently a hydrolyzable group, a monovalent aliphatic or alicyclic hydrocarbon group having from 1 to 20 carbons, or a monovalent aromatic hydrocarbon group having from 6 to 18 carbons, or alternatively R⁵⁰ and R⁵¹ are bonded to form a divalent organic group; and R⁵² and R⁵³ are each independently a halogen atom, a hydrocarbyloxy group, a monovalent aliphatic or alicyclic hydrocarbon group having from 1 to 20 carbons, or a monovalent aromatic hydrocarbon group having from 6 to 18 carbons. R⁵⁰ and R⁵¹ are preferably hydrolyzable groups, and the hydrolyzable groups are preferably trimethylsilyl groups or tert-butyldimethylsilyl groups and particularly preferably trimethylsilyl groups.

The hydrocarbyloxysilane compound represented by General Formula (I) is preferably a hydrocarbyloxysilane compound having a structure represented by General Formulas (X) to (XIII) below.

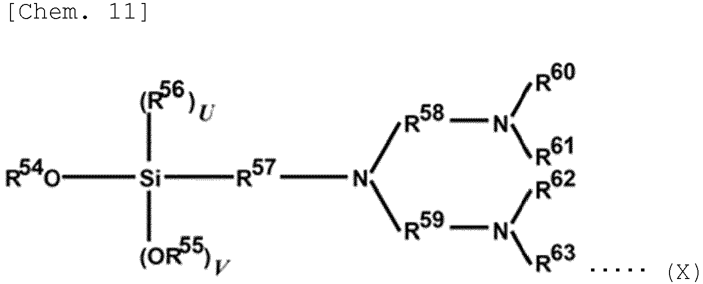

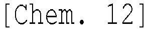

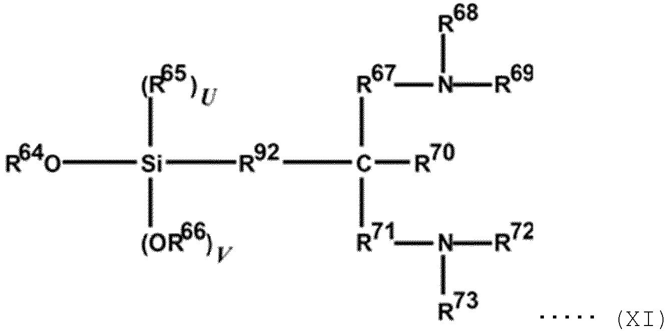

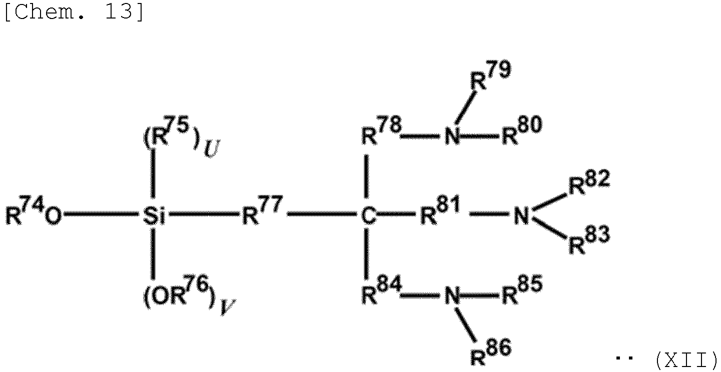

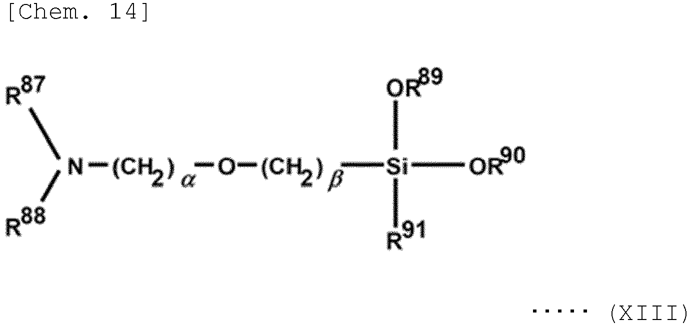

In General Formulas (X) to (XIII), each of symbols U and V is integer from 0 to 2 and U + V = 2. R⁵⁴ to R⁹² in General Formulas (X) to (XIII) may be the same or different divalent aliphatic or alicyclic hydrocarbon group having from 1 to 20 carbons, or a divalent aromatic hydrocarbon group having from 6 to 18 carbons. In General Formula (XIII), α and β are integers from 0 to 5.

Among the compounds of General Formulas (X) to (XII), 2-((hexyl-dimethoxysilyl)methyl)-N1,N1,N3,N3-2-pentamethylpropane-1,3-diamine, N1-(3-(dimethylamino)propyl-N3,N3-dimethyl-N1-(3-(trimethoxysilyl)propyl)propane-1,3-diamine, and 4-(3-(dimethylamino)propyl)-N1,N1,N7,N7-tetramethyl-4-((trimethoxysilyl)methyl)heptane-1,7-diamine are preferred.

Among the compounds of General Formula (XIII), N,N-dimethyl-2-(3-(dimethoxymethylsilyl)propoxy)ethanamine, N,N-bis(trimethylsilyl)-2-(3-(trimethoxysilyl)propoxy) ethanamine, N,N-dimethyl-2-(3-trimethoxysilylpropoxy)ethanamine, and N,N-dimethyl-3-(3-(3-trimethoxysilylpropoxy)ethane-1-amine are preferred.

The hydrocarbyloxysilane compound represented by General Formulas (I) to (XIII) above is preferably used as a modifier when the modified conjugated diene polymer is produced by anionic polymerization.

In the tread rubber composition according to the present invention, a difference between a loss tangent: tan δ₁ at 1% strain at 30°C and a tan δ₂ at 1% strain at 60°C is 0.070 or less. This reduces the temperature dependence of the tan δ and can improve the fuel efficiency over a wide temperature range in a tire to which the rubber composition is applied.

In addition, a difference between a tan δ₀ at 1% strain at 0°C and a tan δ₂ at 60°C is preferably 0.35 or less. Also in the present case, the rubber composition applied to the tread rubber of the tire can reduce the temperature dependence of the fuel efficiency of the tire. In addition, the tire has excellent fuel efficiency and excellent wet performance in low-temperature environments. That is, although the heat generation from the tire is suppressed by the low rolling resistance, the tread part has high followability to the road surface and excellent grip properties so that the tire can exert sufficient wet property.

Glass transition temperature: Tg of polymers, such as the modified styrene-butadiene copolymer rubber and the natural rubber, in the rubber component can be measured by a temperature dispersion curve of tan δ. For example, Tg can be measured using a differential scanning calorimeter manufactured by TA Instruments in a condition at a sweep rate from 5 to 10°C/min.

In addition, in the present invention, a rubber chafer included in a tire case part contains a carbon black having a nitrogen adsorption specific surface area of 25 to 43 m²/g. The rubber chafer containing a carbon black having a nitrogen adsorption specific surface area in the above range can achieve low loss without deteriorating the wear resistance of the rubber chafer. Furthermore, the rubber chafer used in the present invention has not only good wear resistance but also good moldability. The nitrogen adsorption specific surface area of the carbon black needs to be from 25 to 43 m²/g. The nitrogen adsorption specific surface area smaller than the above range would increase hysteresis loss, and the nitrogen adsorption specific surface area larger than the above range would deteriorate wear resistance. Whichever the case, the intended effect of the present invention is not achieved. Examples of such a carbon black may include an FEF.

The compounded amount of the carbon black in the rubber chafer is suitably from 64 to 73 parts by mass and more suitably from 66 to 70 parts by mass based on 100 parts by mass of the rubber component. The compounded amount of the carbon black in the above range can achieve low loss of the tire.

At least a polybutadiene rubber: BR or a styrene-butadiene copolymer rubber: SBR, and natural rubber: NR are used as the rubber component used in the rubber chafer. The content of the polybutadiene rubber or the styrene-butadiene copolymer rubber is preferably from 20 to 60 parts by mass in 100 parts by mass of the rubber component. The content of the polybutadiene rubber or the styrene-butadiene copolymer rubber of 20 parts by mass or more can improve resistance to crack propagation due to low strain and processability of the unvulcanized rubber, while the content of 40 parts by mass or less can improve low loss.

Examples of the styrene-butadiene copolymer rubber that can be used include a solution polymerized styrene-butadiene copolymer rubber, an emulsion polymerized styrene-butadiene copolymer rubber, and a modified styrene-butadiene copolymer rubber.

In addition, the content of the natural rubber is preferably from 40 to 80 parts by mass in 100 parts by mass of the rubber component. The content of the natural rubber of 40 parts by mass or more can improve resistance to crack propagation due to high strain. On the other hand, the content of 80 parts by mass or less can improve the processability of the unvulcanized rubber and achieve a cost reduction effect. Examples of the natural rubber include products used in the tire industry, such as RSS #3, TSR20, and SIR20. In addition to the natural rubber: NR, the butadiene rubber: BR, and the styrene-butadiene copolymer rubber: SBR, at least one of an isoprene rubber: IR, a butyl rubber: IIR, a halogenated butyl rubber, a chloroprene rubber: CR, an acrylonitrile-butadiene copolymer rubber: NBR, or an ethylene-propylene-diene copolymer: EPDM can be used as necessary.

The loss tangent: tan δ_{c} of the rubber chafer rubber composition at 1% strain at 60°C preferably satisfies tan δ_{c} ≤ 0.20 and more preferably satisfies tan δ_{c} ≤ 0.18. It can be said that the rubber chafer rubber composition having the loss tangent in this range can reduce hysteresis loss.

In terms of balancing hysteresis losses in the rubber chafer and the tread, the loss tangent: tan δ_{c} of the rubber chafer rubber at 1% strain at 60°C and the loss tangent: tan δ₀ at 1% strain at 0°C preferably satisfy 0.2 ≤ tan δ_{c}/tan δ₀ ≤ 0.75. Furthermore, 0.3 ≤ tan δ_{c}/tan δ₀ ≤ 0.73 is more preferred, 0.4 ≤ tan δ_{c}/tan δ₀ ≤ 0.72 is still more preferred, and 0.5 ≤ tan δ_{c}/tan δ₀ ≤ 0.72 is particularly preferred.

Furthermore, in an embodiment of the present invention, in addition to the rubber chafer included in the tire case part, a ply coating rubber also preferably contains a carbon black having a nitrogen adsorption specific surface area of 25 to 43 m²/g. The ply coating rubber also containing the carbon black having the nitrogen adsorption specific surface area in the above range can achieve low loss in the tire case and further in the tire as a whole. The carbon black used in the ply coating rubber and the rubber chafer is preferably an FEF or a GPF. The rubber chafer contains preferably a carbon black having a nitrogen adsorption specific surface area of 30 to 43 m²/g and most preferably an FEF in view of wear resistance due to contact with the wheel. For the ply coating rubber, a GPF is preferable. In addition, natural rubber: NR and a styrene-butadiene copolymer rubber: SBR are used in the ply coating rubber.

On the other hand, the rubber composition containing a carbon black having a nitrogen adsorption specific surface area of from 25 to 43 m²/g, when used extensively in the tire case part including the rubber chafer or the ply coating rubber, would increase electrical resistance of the tire and induce a spark and radio noise in the vehicle body. To overcome such a problem, the rubber composition may compound a conductive material, such as a Ketjen black, carbon nanotubes, and vapor-grown carbon fibers, or mixed fibers of electrically conductive fibers and non-electrically conductive fibers may be used in the carcass to provide a conductive path.

The rubber composition according to the present invention can contain, in addition to the rubber component described above, a component of various types commonly used in the rubber industry. Examples of the various components may include additives such as vulcanization accelerators; antioxidants; zinc oxide; stearic acid; softeners; and antiozonants. In addition, examples of the vulcanization accelerators may include thiazole vulcanization accelerators, such as M: 2-mercaptobenzothiazole, DM: dibenzothiazolyl disulfide, and CZ: N-cyclohexyl-2-benzothiazolyl sulfenamide; thiuram vulcanization accelerators, such as TT: tetramethylthiuram sulfide; and guanidine vulcanization accelerators, such asDPG: diphenylguanidine.

Furthermore, the rubber composition can compound sulfur in a range from 1 to 10 parts by weight relative to 100 parts by weight of the rubber component, and a range from 2 to 8 parts by weight is preferred, and a range from 3 to 5 parts by weight is more preferred.

The rubber composition according to an embodiment of the present invention can be produced by kneading each component described above using an apparatus, for example, a Banbury mixer or a kneader, and after molding and vulcanization, the rubber composition can be suitably used as the tread part of the tire.

FIG. 1 illustrates a cross-sectional view of a representative pneumatic tire to which the rubber composition for a tire according to the present invention is applied.

As illustrated in FIG. 1, a pneumatic tire 11 includes a bead core 4 embedded and disposed in each of a pair of bead parts 3. A body part 5 extends in a toroidal shape from a tread part 1 through a sidewall part 2 to the bead part 3. Also, one or more carcass plies 6 having a turned-back part 6a that continues to the body part 5 and is turned back around the bead core 4 is included. At least one layer, three layers shown here, a belt layer 7 formed by rubber-coating a cord is located on the outer circumferential side of the crown part of the carcass ply 6. Furthermore, a chafer part 10 coming into contact with a rim 8 on the outer side in the tire width direction of the bead part is provided.

The tread part 1 includes a tread rubber 1a forming a ground contact surface, and the belt layer 7 disposed in the inner side in the tire radial direction of the tread rubber 1a. In addition, a tread annular body 1b coming into contact with the carcass ply 6 from the outer side in the tire radial direction is provided.

A sidewall rubber 2a is provided to the sidewall part 2 on the outer side in the tire width direction of the carcass ply 6.

The annular bead core 4 formed by coating a convergent body of such as steel wires with rubber is embedded in the bead part 3. Additionally, a bead filler 4a formed of a hard rubber is disposed on the outer side in the tire radial direction of the bead core 4.

The carcass ply 6 is formed entirely in a toroidal shape. The structure sandwiching the bead core 4 and the bead filler 4a between the body part 5 and the turned-back part 6a is formed . In addition, an inner liner layer 9 for maintaining air pressure is provided in the inner side of the carcass ply 6.

In the pneumatic tire 10, as the rubber composition for the tire having the above configuration, the rubber composition for the tread part containing: a rubber component (A) containing natural rubber and a modified styrene-butadiene copolymer rubber; a thermoplastic resin (B) ; and a reinforcing filler (C) ; is applied to the tread part 1. Also a rubber composition containing a carbon black having a nitrogen adsorption specific surface area from 25 to 43 m²/g can be applied to at least one member of the belt coating rubber of the belt layer 7, the squeegee rubber between the carcass plies 6, the cushion rubber between the tread 1a and the belt layer 7, the rubber for the bead filler 4a in addition to the rubber chafer of the chafer part 10 and the carcass ply 6 included in the tire case part other than the tread part 1.

### Examples

Next, the present invention shall be explained in further detail with reference to examples and comparative examples, but the present invention is not limited to these examples.

### [Production Example 1: Production of modified styrene-butadiene copolymer rubber]

To an 800-mL pressure-resistant glass container dried and purged with nitrogen, a solution of 1,3-butadiene in cyclohexane and a solution of styrene in cyclohexane are added to contain 67.5 g of 1,3-butadiene and 7.5 g of styrene. Then 0.6 mmol of 2,2-ditetrahydrofurylpropane is added, 0.8 mmol of n-butyllithium as a polymerization initiator is further added, and then polymerization is carried out at 50°C for 1.5 hours.

The polymerization conversion ratio in the reaction is approximately up to 100%. To the polymerization reaction system, 0.72 mmol of a modifier is added and allowed to react at 50°C for 30 minutes. Thereafter, 2 mL of a 5% by mass solution of 2,6-di-t-butyl-p-cresol:BHT in 2-propanol is added, and the reaction is quenched. The resulting product is dried according to an ordinary method, and a modified styrene-butadiene copolymer rubber is obtained.

### [Production of tire]

A rubber composition for a tread and a rubber composition for a rubber chafer compounded according to the formulations shown in Table 1 are used as rubber compositions of Examples and Comparative Examples and molded into a green tire of 195/65R15, and an experimental tire is produced according to an ordinary method.

### [Evaluation of wet property]

The test tire obtained as described above is mounted on a test vehicle, and the steering stability on a wet road surface is evaluated prophetically. Index values are expressed with the value from Comparative Example 1 being defined as 100. The larger the value, the superior the wet property is.

### [Measurement of loss tangent]

According to the compositions shown in Table 1, each rubber composition is formulated and kneaded, and each rubber composition is vulcanized at 160°C for 10 minutes. A vulcanized rubber obtained from the rubber composition for the tread is measured for a loss tangent: tan δ at 0°C, 30°C, and 60°C under conditions of an initial strain at 2%, a dynamic strain at 1%, and a frequency of 52 Hz using a spectrometer manufactured by Ueshima Seisakusho, Co., Ltd. In addition, a vulcanized rubber obtained from the rubber composition for the rubber chafer is measured for a loss tangent at 60°C.

### Evaluation of rolling resistance of tire as a whole

Rolling resistance of each test tire is measured by smooth drum and force methods according to JIS D 4234. Every prophetic evaluation is expressed with an index value with the prophetic value from Comparative Example 1 at ordinary temperature being defined as 100. The larger the value, the superior the low rolling resistance performance is.

**[Table 1]**

| | | Comparative Example | | | | |
|---|---|---|---|---|---|---|
| | | 1 | 2 | 3 | 4 | 5 |
| Tread part | | | | | | |
| | Natural rubber / phr ^{∗1} | 50 | 70 | 50 | 40 | 100 |
| | Modified SBR / phr ^{∗2} | | 30 | | 60 | |
| | Non-modified SBR / phr ^{∗3} | 50 | | 50 | | |
| | Carbon black / phr ^{∗4} | 5 | 5 | 5 | 5 | 5 |
| | Silica / phr ^{∗5} | 60 | 60 | 60 | 60 | 60 |
| | C₅-C₉ thermoplastic resin / phr ^{∗6} | 3 | 15 | 3 | 15 | 15 |
| | 0°C *t*an *δ* | 1.19 | 0.32 | 1.19 | 1.24 | 0.25 |
| | Difference of loss tangent: tan *δ*₁ - tan *δ*₂ | 0.14 | 0.03 | 0.14 | 0.19 | 0.02 |
| Rubber chafer part | | | | | | |
| Natural rubber/ phr ^{∗7} | | 50 | 50 | 50 | 50 | 50 |
| | BR / phr ^{∗8} | 50 | 50 | 50 | 50 | 50 |
| | Carbon black FEF / phr ^{∗9} | | | 65 | 65 | 65 |
| | Carbon black HAF / phr ^{∗10} | 75 | 75 | | | |
| | Loss tangent tan *δ*_{C} | 0.23 | 0.23 | 0.19 | 0.19 | 0.19 |
| | tan *δ*_{C} / tan *δ*₀ | 0.193 | 0.719 | 0.160 | 0.153 | 0.760 |
| Evaluation | | | | | | |
| | Tire rolling resistance: room temperature | 100 | 100 | 105 | 105 | 100 |
| | low temperature | 90 | 95 | 95 | 94 | 99 |
| | Wet property | 100 | 105 | 99 | 98 | 95 |

**[Table 2]**

| | | Example | | | |
|---|---|---|---|---|---|
| | | 1 | 2 | 3 | 4 |
| Tread part | | | | | |
| | Natural rubber / phr | 70 | 90 | 70 | 70 |
| | Modified SBR / phr | 30 | 10 | 30 | 30 |
| | Non-modified SBR / phr | | | | |
| | Carbon black / phr | 5 | 5 | 5 | 5 |
| | Silica / phr | 60 | 60 | 60 | 60 |
| | C₅-C₉ thermoplastic resin / phr | 15 | 15 | 15 | 15 |
| | 0°C tan *δ* | 0.32 | 0.27 | 0.32 | 0.32 |
| | Difference of loss tangent: tan *δ*₁ - tan *δ*₂ | 0.03 | 0.03 | 0.03 | 0.03 |
| Rubber chafer part | | | | | |
| Natural rubber/ phr | | 50 | 50 | 90 | 50 |
| | BR / phr | 50 | 50 | 10 | 50 |
| | Carbon black FEF / phr | 65 | 65 | 65 | 80 |
| | Carbon black HAF / phr | | | | |
| | Loss tangent tan *δ*_{C} | 0.19 | 0.15 | 0.22 | 0.19 |
| | tan *δ*_{C}/ tan *δ*₀ | 0.594 | 0.704 | 0.469 | 0.688 |
| Evaluation | | | | | |
| | Tire rolling resistance: room temperature | 108 | 107 | 105 | 104 |
| | low temperature | 103 | 102 | 101 | 101 |
| | Wet property | 105 | 103 | 102 | 103 |

In Tables 1 and 2, phr represents parts by weight, and the total amount of rubber components is defined as 100 phr.
*1: Natural rubber, RSS #3
*2: Produced by the method of Production Example 1 described above
*3: Produced by the method of Production Example 1 described above without modification
*4: Carbon black: N234 ISAF
*5: Tosoh Silica Corporation, Nipsil AQ
*6: Nisseki Neopolymer ^{®} 140, manufactured by JX Nippon Oil & Energy Corporation
*7: Natural rubber, RSS #3
*8: BR, manufactured by JSR Corporation
*9: Manufactured by Asahi Carbon Co., Ltd.
*10: Manufactured by Asahi Carbon Co., Ltd.

Test tires from Comparative Examples 1 to 5 have poor low rolling resistance performance at low temperatures, and test tires from Comparative Examples 3 to 5 cannot exhibit a wet property. In contrast, test tires from Examples 1 to 4 have excellent low rolling resistance performance at both ambient temperature and low temperature and a good and improved balance between the low rolling resistance performance and a wet property.

### Industrial Applicability

Use of the present invention provides a pneumatic tire having both low rolling resistance performance and a wet property, especially a wet property during ground contact with a low temperature road surface.

### Numeral and Letters

- 1: Tread part
- 2: Sidewall part
- 3: Bead part
- 4: Bead core
- 5: Body part
- 6: Carcass ply
- 7: Belt layer
- 8: Rim
- 9: Inner liner layer
- 10: Rubber chafer
- 11: Pneumatic tire

## Claims

1. A pneumatic tire comprising:
a carcass as a skeleton, the carcass formed of one or more carcass plies extending in a toroidal shape across a pair of bead parts;
one or more belt layers disposed on the outer side in the tire radial direction of a crown part of the carcass;
a tread part disposed on the outer side in the tire radial direction of the belt layer, the tread part forming a tread surface part; and
a rubber chafer part disposed on the outer surface in the tire width direction of the bead part;
wherein a rubber composition for the tread part comprises:
a rubber component (A), a thermoplastic resin (B), and a reinforcing filler (C);
the rubber component (A) comprises:
from 50 to 95% by mass of natural rubber: NR,
from 5 to 50% by mass of a modified styrene-butadiene copolymer rubber: modified SBR, and
from 10 to 50 parts by mass of the thermoplastic resin (B),
based on 100 parts by mass of the rubber component; and a rubber composition for the rubber chafer part comprises
a carbon black having a nitrogen adsorption specific surface area : N₂SA of 25 to 43 m²/g.

2. The pneumatic tire according to claim 1, wherein the rubber composition for the tread part has a loss sine: tan δ at 1% strain satisfying tan δ₀ ≤ 0.5 and tan δ₁ - tan δ₂ ≤ 0.07, where tan δ₀ is a tan δ at 0°C, tan δ₁ is a tan δ at 30°C, and tan δ₂ is a tan δ at 60°C.

3. The pneumatic tire according to claim 1 or 2, wherein the rubber composition for the tread part contains one or more thermoplastic resins (B) selected from the group consisting of a C₅ resin, a C₅-C₉ resin, a C₉ resin, a terpene resin, a terpene-aromatic compound resin, a rosin resin, a dicyclopentadiene resin, and an alkylphenolic resin.

4. The pneumatic tire according to any one of claims 1 to 3, wherein the reinforcing filler (C) comprises 70% by mass or more of silica in the rubber composition for the tread part.

5. The pneumatic tire according to any one of claims 1 to 4,
wherein, in the tread part, the modified styrene-butadiene copolymer rubber is modified with a hydrocarbyloxysilane compound represented by General Formula (IV) below: 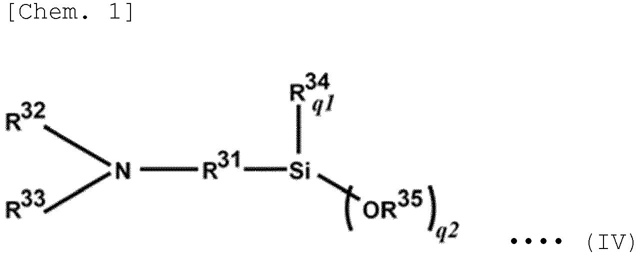
where q1 + q2 = 3, with the provisio that q1 is an integer from 0 to 2, and q2 is an integer from 1 to 3; R³¹ is a divalent aliphatic or alicyclic hydrocarbon group having from 1 to 20 carbons, or a divalent aromatic hydrocarbon group having from 6 to 18 carbons; R³² and R³³ are each independently a hydrolyzable group, a monovalent aliphatic or alicyclic hydrocarbon group having from 1 to 20 carbons, or a monovalent aromatic hydrocarbon group having from 6 to 18 carbons; R³⁴ is a monovalent aliphatic or alicyclic hydrocarbon group having from 1 to 20 carbons, or a monovalent aromatic hydrocarbon group having from 6 to 18 carbons, where R³⁴s may be the same or different when q1 is 2; and R³⁵ is a monovalent aliphatic or alicyclic hydrocarbon group having from 1 to 20 carbons, or a monovalent aromatic hydrocarbon group having from 6 to 18 carbons, where R³⁵s may be the same or different when q2 is 2 or greater; in Genral Formula (IV) or
General Formula (V): 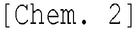 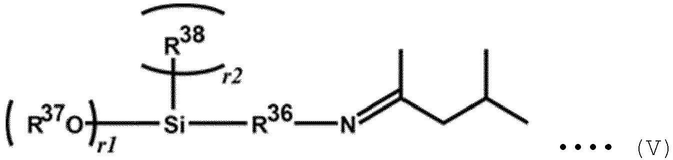
where r1 + r2 = 3, with the provisio that r1 is an integer from 1 to 3, and r2 is an integer from 0 to 2; R³⁶ is a divalent aliphatic or alicyclic hydrocarbon group having from 1 to 20 carbons, or a divalent aromatic hydrocarbon group having from 6 to 18 carbons; R³⁷ is a dimethylaminomethyl group,
a dimethylaminoethyl group, a diethylaminomethyl group,
a diethylaminoethyl group, a methylsilyl(methyl)aminomethyl group, a methylsilyl(methyl)aminoethyl group,
a methylsilyl(ethyl)aminomethyl group,
a methylsilyl(ethyl)aminoethyl group,
a dimethylsilylaminomethyl group, a dimethylsilylaminoethyl group, a monovalent aliphatic or alicyclic hydrocarbon group having from 1 to 20 carbons, or a monovalent aromatic hydrocarbon group having from 6 to 18 carbons, where R³⁷s may be the same or different when r1 is 2 or greater; and R³⁸ is a hydrocarbyloxy group having from 1 to 20 carbons, a monovalent aliphatic or alicyclic hydrocarbon group having from 1 to 20 carbons, or a monovalent aromatic hydrocarbon group having from 6 to 18 carbons, where R³⁸s may be the same or different when r2 is 2 in General Formula(V).

6. The pneumatic tire according to any one of claims 1 to 5, wherein a loss tangent: tan δ_{c} of the rubber composition for the rubber chafer part at 1% strain at 60°C satisfies tan δ_{c} ≤ 0.20.

7. The pneumatic tire according to any one of claims 1 to 6, wherein a relationship between the loss sine: tan δ₀ of the rubber composition for the tread part at 0°C and the loss tangent: tan δ_{c} of the rubber composition for the rubber chafer part satisfies 0.2 ≤ tan δ_{c}/tan δ₀ ≤ 0.75.

8. The pneumatic tire according to any one of claims 1 to 7, wherein a rubber composition comprising a carbon black having a nitrogen adsorption specific surface area: N₂SA from 25 to 43 m²/g is used also in a ply coating rubber in a tire case comprising the rubber chafer part in the pneumatic tire.

9. The pneumatic tire according to any one of claims 1 to 8, wherein a rubber composition comprising a carbon black having a nitrogen adsorption specific surface area: N₂SA from 25 to 43 m²/g is used also in a member other than the rubber chafer part and the ply coating rubber in the tire case comprising the rubber chafer part in the pneumatic tire.

## Patentansprüche

1. Luftreifen, der Folgendes umfasst:
eine Karkasse als ein Gerüst, wobei die Karkasse aus einer oder mehreren Karkassenlagen geformt ist, die sich in einer kreisringförmigen Gestalt über ein Paar von Wulstteilen erstrecken,
eine oder mehrere Gürtellagen, die auf der in der Reifenradialrichtung äußeren Seite der Karkasse angeordnet sind,
einen Laufflächenteil, der auf der in der Reifenradialrichtung äußeren Seite der Gürtellage angeordnet ist, wobei der Laufflächenteil einen Laufflächenoberflächenteil bildet, und
einen Gummi-Wulstschutzbandteil, der auf der in der Reifenbreitenrichtung äußeren Fläche des Wulstteils angeordnet ist,
wobei eine Gummizusammensetzung für den Laufflächenteil Folgendes umfasst:
eine Gummikomponente (A), ein thermoplastisches Harz (B) und einen verstärkenden Füllstoff (C),
wobei die Gummikomponente (A) Folgendes umfasst:
von 50 bis 95 Masse-% von Naturkautschuk: NR,
von 5 bis 50 Masse-% eines modifizierten Styrol-Butadien-Copolymer-Kautschuks: modifizierten SBR, und
von 10 bis 50 Masseteile des thermoplastischen Harzes (B),
auf Grundlage von 100 Masseteilen der Gummikomponente, und
eine Gummizusammensetzung für den Gummi-Wulstschutzbandteil Folgendes umfasst:
einen Ruß, der eine stickstoffadsorptionsspezifische Oberfläche: N₂SA von 25 bis 43 m²/g aufweist.

2. Luftreifen nach Anspruch 1, wobei die Gummizusammensetzung für den Laufflächenteil einen Verlustwinkelsinus: tan δ bei 1 % Dehnung aufweist, der tan δ₀ ≤ 0,5 und tan δ₁ - tan δ₂ ≤ 0,07 erfüllt, wobei tan δ₀ tan δ bei 0 °C ist, tan δ₁ tan δ bei 30 °C ist und tan δ₂ tan δ bei 60 °C ist.

3. Luftreifen nach Anspruch 1 oder 2, wobei die Gummizusammensetzung für den Laufflächenteil ein oder mehrere thermoplastische Harze (B) enthält, die aus der Gruppe ausgewählt sind, die aus einem C₅-Harz, einem C₅-C₉-Harz, einem C₉-Harz, einem Terpenharz, einem Terpen-Aromat-Verbundharz, einem Kolophoniumharz, einem Dicyclopentadienharz und einem Alkylphenolharz besteht.

4. Luftreifen nach einem der Ansprüche 1 bis 3, wobei der verstärkende Füllstoff (C) 70 Masse-% oder mehr von Siliziumdioxid in der Gummizusammensetzung für den Laufflächenteil umfasst.

5. Luftreifen nach einem der Ansprüche 1 bis 4,
wobei, in dem Laufflächenteil, der modifizierte Styrol-Butadien-Copolymer-Kautschuk mit einer Hydroxycarbyloxysilan-Verbindung modifiziert ist, die dargestellt wird durch die nachstehende Allgemeine Formel (IV): 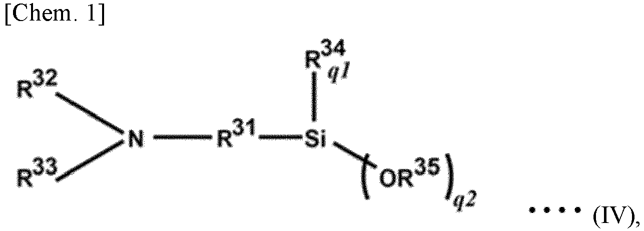
wobei q1 + q2 = 3, mit der Maßgabe, dass q1 eine ganze Zahl von 0 bis 2 ist und q2 eine ganze Zahl von 1 bis 3 ist, R³¹ eine zweiwertige aliphatische oder alizyklische Kohlenwasserstoffgruppe, die von 1 bis 20 Kohlenstoffatome aufweist, oder eine zweiwertige aromatische Kohlenwasserstoffgruppe, die von 6 bis 18 Kohlenstoffatome aufweist, ist, R³² und R³³ jeweils unabhängig eine hydrolysierbare Gruppe, eine einwertige aliphatische oder alizyklische Kohlenwasserstoffgruppe, die von 1 bis 20 Kohlenstoffatome aufweist, oder eine einwertige aromatische Kohlenwasserstoffgruppe, die von 6 bis 18 Kohlenstoffatome aufweist, sind, R³⁴ eine einwertige aliphatische oder alizyklische Kohlenwasserstoffgruppe, die von 1 bis 20 Kohlenstoffatome aufweist, oder eine einwertige aromatische Kohlenwasserstoffgruppe, die von 6 bis 18 Kohlenstoffatome aufweist, ist, wobei R³⁴ gleich oder unterschiedlich sein können, wenn q1 2 ist, und R³⁵ eine einwertige aliphatische oder alizyklische Kohlenwasserstoffgruppe, die von 1 bis 20 Kohlenstoffatome aufweist, oder eine einwertige aromatische Kohlenwasserstoffgruppe, die von 6 bis 18 Kohlenstoffatome aufweist, ist, wobei R³⁵ gleich oder unterschiedlich sein können, wenn q2 2 oder größer ist, in der Allgemeinen Formel (IV) oder
die Allgemeine Formel (V): 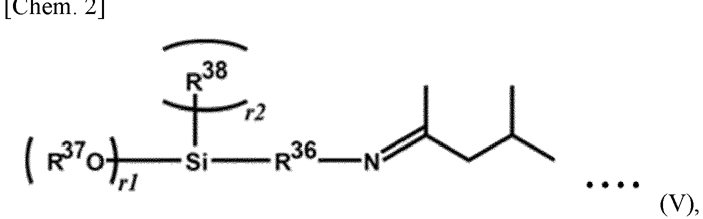
wobei rl + r2 = 3, mit der Maßgabe, dass r1 eine ganze Zahl von 1 bis 3 ist und r2 eine ganze Zahl von 0 bis 2 ist, R³⁶ eine zweiwertige aliphatische oder alizyklische Kohlenwasserstoffgruppe, die von 1 bis 20 Kohlenstoffatome aufweist, oder eine zweiwertige aromatische Kohlenwasserstoffgruppe, die von 6 bis 18 Kohlenstoffatome aufweist, ist, R³⁷ eine Dimethylaminomethylgruppe, eine Dimethylaminoethylgruppe, eine Diethylaminomethylgruppe, eine Diethylaminoethylgruppe, eine Methylsilyl(methyl)aminomethylgruppe, eine Methylsilyl(methyl)aminoethylgruppe, eine Methylsilyl(ethyl)aminomethylgruppe, eine Methylsilyl(ethyl)aminoethylgruppe, eine Dimethylsilylaminomethylgruppe, eine Dimethylsilylaminoethylgruppe, eine einwertige aliphatische oder alizyklische Kohlenwasserstoffgruppe, die von 1 bis 20 Kohlenstoffatome aufweist, oder eine einwertige aromatische Kohlenwasserstoffgruppe, die von 6 bis 18 Kohlenstoffatome aufweist, ist, wobei R³⁷ gleich oder unterschiedlich sein können, wenn r1 2 oder größer ist, und R³⁸ eine Hydrocarbyloxygruppe, die von 1 bis 20 Kohlenstoffatome aufweist, eine einwertige aliphatische oder alizyklische Kohlenwasserstoffgruppe, die von 1 bis 20 Kohlenstoffatome aufweist, oder eine einwertige aromatische Kohlenwasserstoffgruppe, die von 6 bis 18 Kohlenstoffatome aufweist, ist, wobei R³⁸ gleich oder unterschiedlich sein können, wenn r2 2 ist, in der Allgemeinen Formel (V).

6. Luftreifen nach einem der Ansprüche 1 bis 5, wobei ein Verlustwinkeltangens: tan δ_{C} der Gummizusammensetzung für den Gummi-Wulstschutzbandteil bei 1 % Dehnung bei 60 °C tan δ_{C} ≤ 0,20 erfüllt.

7. Luftreifen nach einem der Ansprüche 1 bis 6, wobei eine Beziehung zwischen dem Verlustwinkelsinus: tan δ₀ der Gummizusammensetzung für den Laufflächenteil bei 0 °C und dem Verlustwinkeltangens: tan δ_{C} der Gummizusammensetzung für den Gummi-Wulstschutzbandteil 0,2 ≤ tan δ_{C}/tan δ₀ ≤ 0,75 erfüllt.

8. Luftreifen nach einem der Ansprüche 1 bis 7, wobei eine Gummizusammensetzung, die einen Ruß umfasst, der eine stickstoffadsorptionsspezifische Oberfläche: N₂SA von 25 bis 43 m²/g aufweist, ebenfalls in einem Lagenüberzugsgummi in einer Reifenhülle, die den Gummi-Wulstschutzbandteil in dem Luftreifen umfasst, verwendet wird.

9. Luftreifen nach einem der Ansprüche 1 bis 8, wobei eine Gummizusammensetzung, die einen Ruß umfasst, der eine stickstoffadsorptionsspezifische Oberfläche: N₂SA von 25 bis 43 m²/g aufweist, ebenfalls in einem anderen Element als dem Gummi-Wulstschutzbandteil und dem Lagenüberzugsgummi in der Reifenhülle, die den Gummi-Wulstschutzbandteil in dem Luftreifen umfasst, verwendet wird.

## Revendications

1. Bandage pneumatique, comprenant :
une carcasse en tant que squelette, la carcasse étant formée à partir d'une ou de plusieurs nappes de carcasse s'étendant en une forme toroïdale à travers une paire de parties de talon ;
une ou plusieurs couches de ceinture disposées sur le côté externe, dans la direction radiale du bandage pneumatique, d'une partie de sommet de la carcasse ;
une partie de bande de roulement disposée sur le côté externe, dans la direction radiale du bandage pneumatique, de la couche de ceinture, la partie de bande de roulement formant une partie de surface de bande de roulement ; et
une partie de gomme sous bandelette disposée sur la surface externe, dans la direction de la largeur du bandage pneumatique, de la partie de talon ;
dans lequel une composition de caoutchouc pour la partie de bande de roulement comprend :
un composant de caoutchouc (A), une résine thermoplastique (B) et un bourrage sur tringle de renforcement (C) ;
le composant de caoutchouc (A) comprend :
50 à 95% en poids de caoutchouc naturel : NR ;
5 à 50% en poids d'un caoutchouc de copolymère styrène-butadiène modifié : SBR modifié ; et
10 à 50 parties en poids de la résine thermoplastique (B),
sur la base de 100 parties en poids du composant de caoutchouc ; et
une composition de caoutchouc pour la partie de gomme sous bandelette comprend :
un noir de carbone ayant une aire spécifique à adsorption d'azote : N₂SA comprise entre 25 à 43 m²/g.

2. Bandage pneumatique selon la revendication 1, dans lequel la composition de caoutchouc pour la partie de bande de roulement présente une tangente d'angles de perte : tan δ en présence d'une contrainte de 1% satisfaisant tan δ₀ ≤ 0,5 et tan δ₁ - tan δ₂ ≤ 0,07, où tan δ₀ représente une tan δ à 0°C, tan δ₁ étant une tan δ à 30°C et tan δ₂ étant une tan δ à 60°C.

3. Bandage pneumatique selon la revendication 1 ou 2, dans lequel la composition de caoutchouc pour la partie de bande de roulement contient une ou plusieurs résines thermoplastiques (B) sélectionnées dans le groupe constitué d'une résine C₅, d'une résine C₅-C₉, d'une résine C₉, d'une résine de terpène, d'une résine de composé terpènearomatique, d'une résine de colophane, d'une résine de dicyclopentadiène, et d'une résine alkylphénolique.

4. Bandage pneumatique selon l'une quelconque des revendications 1 à 3, dans lequel le bourrage sur tringle de renforcement (C) comprend 70% en poids ou plus de silice dans la composition de caoutchouc pour la partie de bande de roulement.

5. Bandage pneumatique selon l'une quelconque des revendications 1 à 4,
dans lequel, dans la partie de bande de roulement, le caoutchouc de copolymère styrène butadiène modifié est modifié par un composé d'hydrocarbyloxy-silane représenté par la formule générale (IV) ci-dessous : 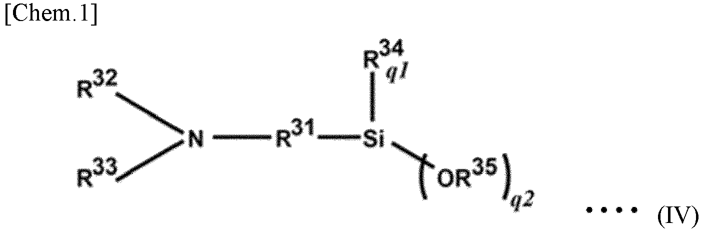
où q1 + q2 = 3, à condition que q1 soit un nombre entier compris entre 0 et 2, et q2 soit un nombre entier compris entre 1 à 3 ; R³¹ est un groupe d'hydrocarbures aliphatique ou alicyclique bivalent contenant de 1 à 20 carbones, ou un groupe d'hydrocarbures aromatique bivalent contenant de 6 à 18 carbones ; R³² et R³³ constituent chacun indépendamment un groupe hydrolysable, un groupe d'hydrocarbures aliphatique ou alicyclique monovalent ayant de 1 à 20 carbones , ou un groupe d'hydrocarbures aromatique monovalent ayant de 6 à 18 carbones; R³⁴ est un groupe d'hydrocarbures aliphatique ou alicyclique monovalent ayant de 1 à 20 carbones, ou un groupe d'hydrocarbures aromatique monovalent ayant de 6 à 18 carbones, où les R³⁴s peuvent être identiques ou différents lorsque q1 correspond à 2 ; et R³⁵ est un groupe d'hydrocarbures aliphatique ou alicyclique monovalent ayant de 1 à 20 carbones, ou un groupe d'hydrocarbures aromatique monovalent ayant de 6 à 18 carbones, où les R³⁵s peuvent être identiques ou différents lorsque q2 correspond à 2 ou plus ; dans la formule générale (IV) ou
la formule générale (V) : 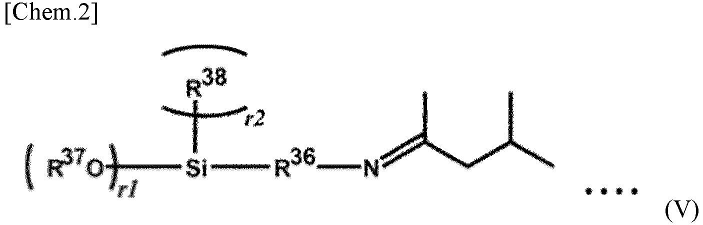
où r1 + r2 = r3, à condition que r1 soit un nombre entier compris entre 1 et 3, et r2 soit n nombre entier compris entre 0 et 2 ; R³⁶ est un groupe d'hydrocarbures aliphatique ou alicyclique bivalent ayant de 1 à 20 carbones, ou in groupe d'hydrocarbures aromatique bivalent ayant de 6 à 18 carbones ; R³⁷ est un groupe diméthylaminométhyl, un groupe diméthylaminoéthyl, un groupe diéthylaminométhyl, un groupe diéthylaminoéthyl, un groupe méthylsilyl(méthyl)aminométhyl, un groupe méthylsilyl(méthyl)aminoéthyl, un groupe méthylsilyl(éthyl)aminométhyl, un groupe méthylsilyl(éthyl)aminoéthyl, un groupe diméthylsilylaminométhyl, un groupe diméthylsilylaminoéthyl, un groupe d'hydrocarbures aliphatique ou alicyclique monovalent ayant de 1 à 20 carbones, ou un groupe d'hydrocarbures aromatique monovalent ayant de 6 à 18 carbones, où les R³⁷ peuvent être identiques ou différents lorsque r1 correspond à 2 ou plus ; et R³⁸ est un groupe hydrocarbyloxy ayant de 1 à 20 carbones, un groupe d'hydrocarbures aliphatique ou alicyclique monovalent ayant de 1 à 20 carbones, ou un groupe d'hydrocarbures aromatique monovalent ayant de 6 à 18 carbones, où les R³⁸s peuvent être identiques ou différents lorsque r2 correspond à 2 dans la formule générale (V).

6. Bandage pneumatique selon l'une quelconque des revendications 1 à 5, dans lequel une tangente d'angle de pertes : tan δ_{c} de la composition de caoutchouc pour la partie de gomme sous bandelette en présence d'une contrainte de 1% à 60°C satisfait tan δ_{c} ≤ 0,20.

7. Bandage pneumatique selon l'une quelconque des revendications 1 à 6, dans lequel une relation entre la tangente d'angles de perte : tan δ₀ de la composition de caoutchouc pour la partie de bande de roulement à 0°C et la tangente d'angles de perte : tan δ_{c} de la composition de caoutchouc pour la partie de gomme sous bandelette satisfait 0,2 ≤ tan δ_{c /}tan δ₀ ≤ 0,75.

8. Bandage pneumatique selon l'une quelconque des revendications 1 à 7, dans lequel une composition de caoutchouc comprenant un noir de carbone ayant une aire de surface spécifique à adsorption d'azote : N₂SA comprise entre 25 et 43 m²/g est également utilisée dans une gomme de revêtement de nappe dans une enveloppe du bandage pneumatique comprenant la partie de gomme sous bandelette dans le bandage pneumatique.

9. Bandage pneumatique selon l'une quelconque des revendications 1 à 8, dans lequel une composition de caoutchouc comprenant un noir de carbone ayant une aire de surface spécifique à adsorption d'azote : N₂SA comprise entre 25 et 43 m²/g est utilisée également dans un élément autre que la partie de gomme sous bandelette et la gomme de revêtement de nappe dans l'enveloppe du bandage pneumatique comprenant la partie de gomme sous bandelette dans le bandage pneumatique.
